# EUROPEAN PATENT APPLICATION

(11) **EP 4 518 006 A1**
(43) Date of publication of application: **05.03.2025**
(21) Application number: 23884449.2
(22) Date of filing: 06.09.2023
(51) Int. Cl.: H01M 50/519, H01M 50/593, H01M 10/052

(54) **PROTECTION PLATE AND BATTERY**

(30) Priority: 31.10.2022 CN 202222892991 U
(71) Applicant: Zhuhai Cosmx Power Co., Ltd., Zhuhai, Guangdong 519180 (CN)
(72) Inventor: LI, Guotai, Zhuhai, Guangdong 519180 (CN); ZONG, Yanzhen, Zhuhai, Guangdong 519180 (CN); LUO, Zihao, Zhuhai, Guangdong 519180 (CN)
(74) Representative: Vossius & Partner Patentanwälte Rechtsanwälte mbB
(86) International application number: PCT/CN2023/117349
(87) International publication number: WO 2024/093513

(57) **Abstract**

Provided are a protection board (100) and a battery (200). The protection board (100) includes an access board (110), a diverter board (120), a rigid board (140), and at least one connection board (130). The rigid board (140), the diverter board (120) and the connection board (130) are all connected to the access board (110). The rigid board (140) and the access board (110) are stacked to each other. The diverter board (120) is located on one side of the access board (110) and is bent around the rigid board (140), and at least one connection board (130) is located at one end of the access board (110) along its extension direction. The present application provides a protection board (100) with small size and a battery (200) with large capacity.

## Description

The present application claims priority to Chinese Patent Application No. 202222892991.1, entitled "PROTECTION BOARD AND BATTERY", and filed with the China National Intellectual Property Administration on October 31, 2022, which is hereby incorporated by reference in its entirety.

### TECHNICAL FIELD

The present application relates to the technical field of battery, and in particular to a protection board and a battery.

### BACKGROUND

During the use of a lithium battery, over-charging, over-discharging, short circuit and over-current will affect the service life and performance of the battery, and will cause the lithium battery to burn or explode in severe cases. Therefore, each lithium battery must be equipped with a protection board, consisting of a chip and several components, which can effectively monitor and prevent damage to the battery through a protection loop, preventing the dangers of burning, explosion etc., caused by over-charging, over-discharging and short circuit.

In the prior art, the protection board includes an access board and connection boards located at both ends of the access board. The access board is connected to the cell of battery, and the connection boards are connected to the connector of battery. The protection board is provided with a protection circuit to protect the cell in the event of over-charging, over-discharging, short circuit, over-current, etc. Where, a lithium battery with high power and fast charging performance will use high current for charging. The higher the current during charging, the larger the size of the protection board required.

However, in the case of a fixed battery size, in order to ensure a larger size of protection board, the size of the cell can only be reduced, resulting in a smaller battery capacity.

### SUMMARY

The present application provides a protection board and a battery, and the protection board is smaller in size and the capacity of battery is larger.

In a first aspect, the present application provides a protection board, including an access board, a diverter board, a rigid board, and at least one connection board;
where, the rigid board, the diverter board and the connection board are all connected to the access board, the rigid board and the access board are stacked to each other, the diverter board is located on one side of the access board and is bent around the rigid board, and the at least one connection board is located at one end of the access board along its extension direction.

In a possible implementation, in the protection board provided by the present application, the connection board is two in number, and two connection boards are located at both ends of the access board along its extension direction respectively.

In a possible implementation, in the protection board provided by the present application, the diverter board includes a main body of diverter board and a first bending portion and a second bending portion that are respectively connected to different parts of the main body of diverter board, and the first bending portion and the second bending portion are located on a same side of the main body of diverter board and are arranged at intervals along an extension direction of the main body of diverter board;
one end of the first bending portion is connected to the main body of diverter board and the other end of the first bending portion is connected to the access board; one end of the second bending portion is connected to the main body of diverter board and the other end of the second bending portion is connected to the access board.

In a possible implementation, in the protection board provided by the present application, the access board is provided with a first connection portion and a second connection portion, the first connection portion is arranged opposite to the first bending portion, and the second connection portion is located between the second bending portion and the first bending portion.

In a possible implementation, in the protection board provided by the present application, the access board, the diverter board and the connection board are integrally formed;
the rigid board is arranged on one side of the access board away from the first connection portion and the second connection portion, with an extension direction of the rigid board being consistent with the extension direction of the access board, and the rigid board is connected to the access board.

In a possible implementation, in the protection board provided by the present application, the rigid board is provided with accommodating grooves with a notch of each accommodating groove facing one side of the diverter board, and the accommodating grooves are configured to accommodate the first bending portion and the second bending portion respectively.

In a possible implementation, in the protection board provided by the present application, a groove depth of the accommodating grooves is 0.1-2mm.

In a possible implementation, the protection board provided by the present application further includes a detection component, and the detection component is located on one side of the rigid board facing the access board, with the detection component being connected to the rigid board;
the access board has an avoidance groove for avoiding the detection component.

In a possible implementation, in the protection board provided by the present application, the rigid board is provided with a third connection portion and a fourth connection portion; a spacing is disposed between the third connection portion and the fourth connection portion along an extension direction of the avoidance groove; and orthographic projections of the third connection portion and the fourth connection portion in a plane where a side wall of the avoidance groove at one end along its extension direction is located are at least partially overlapped; and the third connection portion and the fourth connection portion are configured to connect with different pins of the detection component respectively.

In a second aspect, the present application provides a battery, including a cell, at least one connector, and the protection board provided by the first aspect above;
where the cell is connected to the access board of the protection board;
the connector is arranged in one-to-one correspondence with the connection board of the protection board, with the connector being connected to the connection board.

In a possible implementation, in the battery provided by the present application, the diverter board of the protection board is bent around the rigid board of the protection board toward the cell;
orthographic projections of the diverter board, the access board, and the rigid board toward a plane of the cell along its extension direction are at least partially located within a top sealing edge of the cell.

The present application provides a protection board and a battery. The protection board is provided with an access board, a diverter board, a rigid board and at least one connection board, where the rigid board, the diverter board and the connection board are all connected to the access board, the rigid board and the access board are stacked to each other, the diverter board is located on one side of the access board and is bent around the rigid board, and at least one connection board is located at one end of the access board along its extension direction. In this way, the current flowing out of the cell enters the connection board through two paths: the rigid board (the access board) and the diverter board, and then supplies power to the device through the connector of the battery. Compared with the fact in the part that the current flowing out of the cell enters the connection board through the access board and then supplies power to the device through the connector of the battery, the current in the access board is reduced, and the size of the access board may be reduced; moreover, the diverter board is bent around the rigid board, and the access board does not additionally increase the size of the protection board. Therefore, the present application provides a protection board with a smaller size and a battery having larger capacity.

### BRIEF DESCRIPTION OF DRAWINGS

In order to illustrate the technical solutions in the embodiments of the present application or in the prior art more clearly, the drawings required in the description of the embodiments or in the prior art will be briefly introduced below. Obviously, the drawings in the following description are only some embodiments of the present application. For the person skilled in the art, other drawings may also be obtained based on these drawings without creative work.
FIG. 1 is a structurally schematic diagram of a protection board provided by an embodiment of the present application.
FIG. 2 is an exploded view of FIG. 1.
FIG. 3 is a structurally schematic diagram of FIG. 1 from another angle.
FIG. 4 is a schematic diagram of connection between a protection board and a cell provided by an embodiment of the present application.
FIG. 5 is another structurally schematic diagram of a protection board provided by an embodiment of the present application.
FIG. 6 is yet another structurally schematic diagram of a protection board provided by an embodiment of the present application.
FIG. 7 is a structurally schematic diagram of FIG. 1 from yet another angle.
FIG. 8 is a partially enlarged view at A in FIG. 4.
FIG. 9 is a structurally schematic diagram of a battery provided by an embodiment of the present application.
FIG. 10 is a structurally schematic diagram of a protection board in a battery provided by an embodiment of the present application before being bent.
FIG. 11 is a structurally schematic diagram of a protection board in a battery provided by an embodiment of the present application after being bent.
FIG. 12 is a structurally schematic diagram of the interior after sectioning along a B-B line in FIG. 9.

Description of the reference signs:
100 - protection board;
110 - access board; 111 - first connection portion; 112 - second connection portion; 113 - avoidance groove; 120 - diverter board; 121 - main body of diverter board; 122 - first bending portion; 123 - second bending portion; 130 - connection board; 140 - rigid board; 141 - accommodating groove; 142 - third connection portion; 143 - fourth connection portion; 150 - detection component;
200 - battery;
210 - cell; 211 - positive tab; 212 - negative tab; 220 - connector.

### DESCRIPTION OF EMBODIMENTS

In the description of the present application, it should be noted that, unless otherwise clearly specified and limited, the terms "installation", "connecting", and "connection" should be understood in a broad sense, for example, it may be a fixed connection, it may be an indirect connection through an intermediate medium, or it may be an internal connection between two elements or an interaction relationship between two elements. For the person skilled in the art, the specific meanings of the above terms in the present application may be understood according to specific circumstances.

In the description of the present application, it should be understood that the terms "upper", "lower", "front", "back", "vertical", "horizontal", "top", "bottom", "inside", "outside", etc., for indicating orientation or positional relationship are based on the orientation or positional relationship shown in the drawings, which is only for the convenience of describing the present application and simplifying the description, rather than indicating or implying that the referred device or element must have a specific orientation and be constructed and operated in a specific orientation. Therefore, it should not be understood as a limitation to the present application.

The terms "first", "second", "third" (if any) in the description, claims and the above-mentioned drawings of the present application are used to distinguish similar objects, and are not necessarily used to describe a specific order or sequence. It should be understood that the data used in this way may be interchanged where appropriate, so that the embodiments of the present application described herein can be implemented in an order other than those illustrated or described herein.

In addition, the terms "include", "have" and any variations thereof, are intended to cover a non-exclusive inclusion. For example, a process, method, system, product, or maintenance tool that includes a series of steps or units is not necessarily limited to those steps or units explicitly listed, but may include other steps or units not explicitly listed or inherent to such process, method, product, or maintenance tool.

In order to make the purpose, technical solutions and advantages of the present application clearer, the technical solutions in the embodiments of the present application will be clearly and completely described below in combination with the drawings in the embodiments of the present application. Obviously, the described embodiments are a part of the embodiments of the present application, but not all of them. Based on the embodiments in the present application, all other embodiments obtained by the person skilled in the art without creative work fall within the protection scope of the present application.

In the prior art, the protection board includes an access board and connection boards located at both ends of the access board. The access board is connected to the cell of battery, and the connection board is connected to the connector of battery. When in use, the current flowing out of the cell enters the connection board through the access board and then supplies power to the device through the connector of battery. Alternatively, the external current supplies power to the cell through the connector, the connection board and the access board. However, the current passing through the access board in this way is large, the size of the access board is large, and the size of the cell needs to be reduced, resulting in a smaller battery capacity.

Further, the connection board and the access board are connected by welding, which is difficult to process and has poor connection reliability, and the connection is prone to break when subjected to a collision.

In order to solve the above technical problems, the present application provides a protection board and a battery. The protection board is provided with an access board, a diverter board, a rigid board and at least one connection board. The rigid board, the diverter board and the connection board are all connected to the access board. The rigid board and the access board are stacked together, the diverter board is located on one side of the access board, and the diverter board is bent around the rigid board, and the at least one connection board is located at one end of the access board along the extension direction. In this way, the current flowing out of the cell enters the connection board through two paths: the rigid board and the diverter board, and then supplies power to the device through the connector of battery. Compared with the fact in the prior art that the current flowing out of the cell enters the connection board through the rigid board (the access board) and then supplies power to the device through the connector of battery, the current in the access board is reduced, and the size of the access board may be reduced; moreover, the diverter board is bent around the rigid board, and the access board will not additionally increase the size of the protection board. Therefore, the present application provides a protection board with a smaller size and a battery having larger capacity.

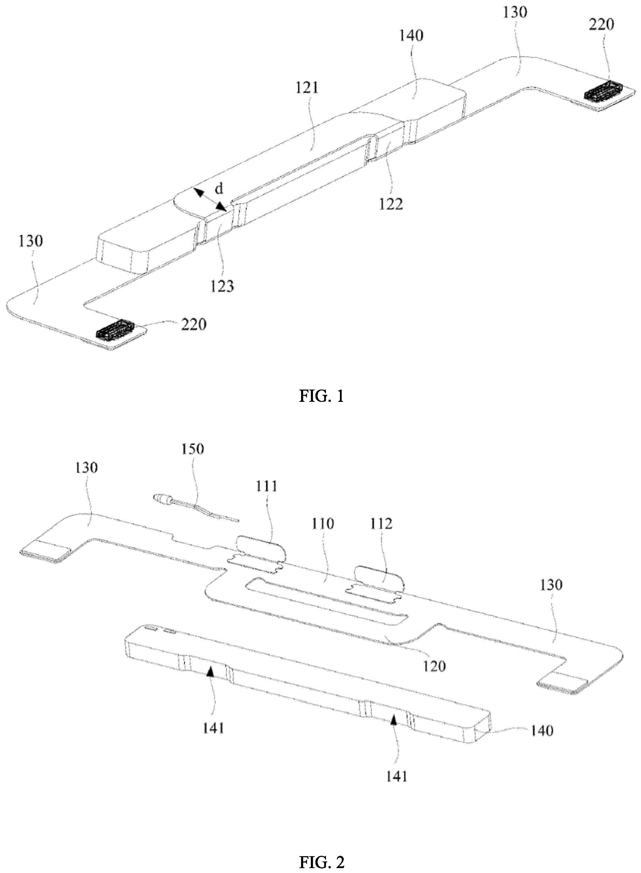

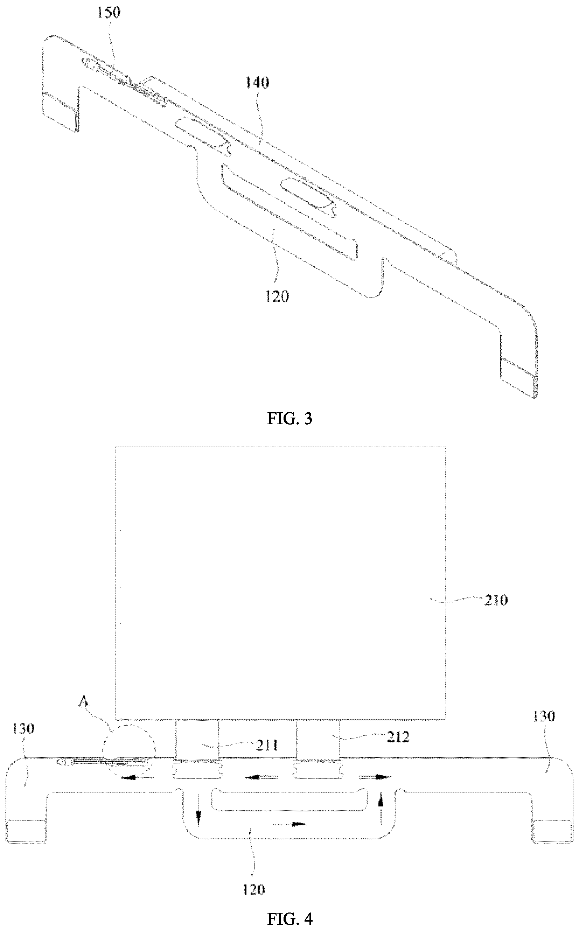

FIG. 1 is a structurally schematic diagram of a protection board provided by an embodiment of the present application. FIG. 2 is an exploded view of FIG. 1. FIG. 3 is a structurally schematic diagram of FIG. 1 from another angle. FIG. 4 is a schematic diagram of connection between a protection board and a cell provided by an embodiment of the present application.

Referring to FIG. 1 to FIG. 4, the present application provides a protection board 100, including an access board 110, a diverter board 120, a rigid board 140 and at least one connection board 130.

The rigid board 140, the diverter board 120 and the connection board 130 are all connected to the access board 110. The rigid board 140 and the access board 110 are stacked together. The diverter board 120 is located on one side of the access board 110, and the diverter board 120 is bent around the rigid board 140, and at least one connection board 130 is located at one end of the access board 110 along the extension direction.

Where, the access board 110 is configured to connect with the cell 210 of the battery 200, and the diverter board 120 is disposed around the access board 110 and bent towards the cell 210 of the battery 200. The connection board 130 is configured to connect with the connector 220 of the battery 200.

Referring to FIG. 1, a dimension *d* of the protection board 100 is a width of the access board 110. In FIG. 1, the diverter board 120 is in bent state around the access board 110 toward the cell 210 of the battery 200. In FIG. 3, the diverter board 120 is in a state before bending around the access board 110 toward the cell 210 of the battery 200.

Where, the number of access boards 110 may be one or two.

It can be understood that the access board 110, the diverter board 120 and the connection board 130 are integrally arranged and formed in one molding process without the need for assembling, which may reduce the processing steps of the battery 200 and improve the efficiency of assembly. At the same time, the access board 110, the diverter board 120 and the connection board 130 are integrally arranged with high connection reliability, and the connection is not prone to breakage due to collision and other reasons, thereby having the relatively high reliability.

Where, the integrated access board 110, the diverter board 120 and the connection board 130 may be an integrated flexible circuit board.

It should be noted that the arrows in FIG. 4 indicate the moving directions of positive current and negative current when the cell 210 is discharged, where the flow direction of positive current is indicated by a single-line arrow, and the flow direction of negative current is indicated by a double-line arrow. It can be seen that a part of positive current enters the connector 220 on one side through the access board 110 and the connection board 130, and the other part of positive current enters the connector 220 on the other side through the access board 110, the diverter board 120 and the other connection board 130. A part of negative current enters the connector 220 through the access board 110 and the connection board 130 on one side, and a part of negative current enters another connector 220 through the access board 110 and the connection board 130 on the other side. When charging, the current direction is opposite, which will not be repeated by the present embodiment in detail here.

Where, the rigid board 140 is provided with a protection circuit to protect the cell 210 of the battery 200 in the event of over-charging, over-discharging, short circuit, over-current, etc. Moreover, the rigid board 140 may also play a reinforcing role, improving the strength of the integrated access board 110, the diverter board 120 and the connection board 130.

The present embodiment provides a protection board 100 by arranging an access board 110, a diverter board 120, a rigid board 140 and at least one connection board 130.

The rigid board 140, the diverter board 120 and the connection board 130 are all connected to the access board 110. The rigid board 140 and the access board 110 are stacked together. The diverter board 120 is located on one side of the access board 110, and the diverter board 120 is bent around the rigid board 140. At least one connection board 130 is located at one end of the access board 110 along its extension direction. In this way, the current flowing out of the cell 210 enters the connection board 130 through two paths: the access board 110 and the diverter board 120, and then supplies power to the device through the connector 220 of the battery 200. Compared with the fact in the prior art that the current flowing out of the cell 210 enters the connection board 130 through the access board 110 and then supplies power to the device through the connector 220 of the battery 200, the current of the access board 110 is reduced, and the size *d* of the access board 110 may be reduced; moreover, the diverter board 120 is bent around the access board 110 toward the cell 210 of the battery 200, and the access board 110 will not additionally increase the size *d* of the protection board 100 of the battery 200. Therefore, the present application provides a protection board 100 with a smaller size *d* and a battery 200 having a larger capacity.

In a possible implementation, there are two connection boards 130, and the two connection boards 130 are located at two ends of the access board 110 along its extension direction.

The number of connection boards 130 is two, and the connectors 220 of the battery 200 may be arranged in one-to-one correspondence with the connection boards 130. In this way, the protection board 100 may output or receive current through the two connectors 220, which is beneficial for reducing the size *d* of the protection board 100.

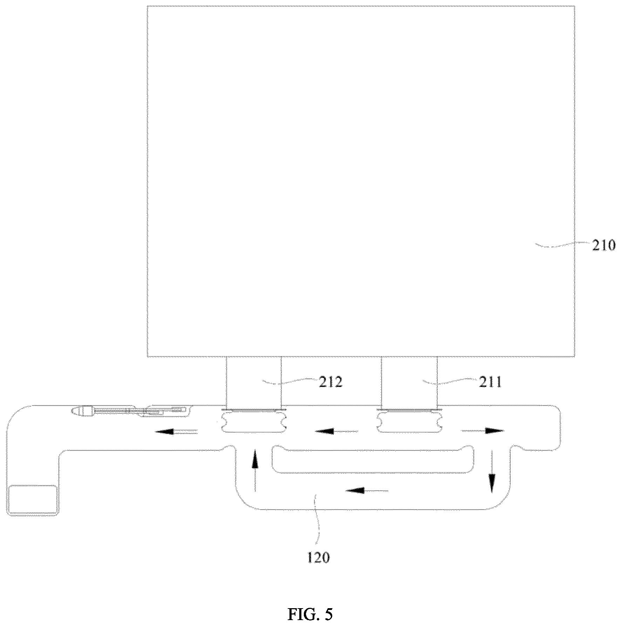

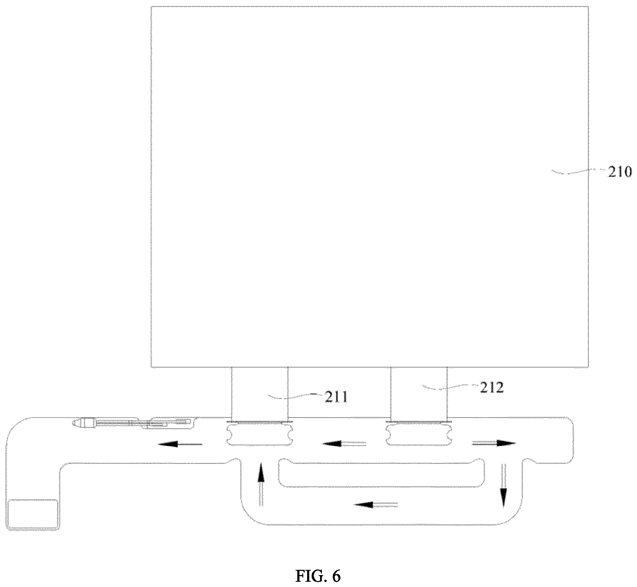

FIG. 5 is another structurally schematic diagram of a protection board provided by an embodiment of the present application. FIG. 6 is yet another structurally schematic diagram of a protection board provided by an embodiment of the present application.

Referring to FIG. 5 and FIG. 6, the access board 110 is provided with a first connection portion 111 and a second connection portion 112, one of which is used for connecting to a positive tab 211 of the cell 210, and the other is used for connecting to a negative tab 212 of the cell 210.

Where, the number of the connection board 130 is one.

Specifically, as shown in FIG. 5, the first connection portion 111 on the access board 110 is connected to the positive tab 211 of the cell 210, and the second connection portion 112 on the access board 110 is connected to the negative tab 212 of the cell 210. The connection board 130 is located at one end of the access board 110 close to the first connection portion 111. The negative current output by the negative tab 212 of the cell 210 enters the connector 220 through the access board 110 and the connection board 130; and one part of the positive current output by the positive tab 211 of the cell 210 enters the connector 220 through the access board 110 and the connection board 130, and the other part of the positive current enters the connector 220 through the access board 110, the diverter board 120 and the connection board 130.

As shown in FIG. 6, the first connection portion 111 on the access board 110 is connected to the negative tab 212 of the cell 210, and the second connection portion 112 on the access board 110 is connected to the positive tab 211 of the cell 210. The connection board 130 is located at one end of the access board 110 close to the first connection portion 111. The positive current output by the positive tab 211 of the cell 210 enters the connector 220 through the access board 110 and the connection board 130, and one part of the positive current output by the negative tab 212 of the cell 210 enters the connector 220 through the access board 110 and the connection board 130, and the other part of the negative current enters the connector 220 through the access board 110, the diverter board 120 and the connection board 130.

In some embodiments, the diverter board 120 includes a main body of diverter board 121, and a first bending portion 122 and a second bending portion 123 that are respectively connected to different parts of the main body of diverter board 121. The first bending portion 122 and the second bending portion 123 are located on the same side of the main body of diverter board 121 and are arranged at intervals along the extension direction of the main body of diverter board 121.

Where, one end of the first bending portion 122 is connected to the main body of diverter board 121 with the other end thereof being connected to the access board 110; and one end of the second bending portion 123 is connected to the main body of diverter board 121 with the other end thereof being connected to the access board 110. In this way, it is possible for the main body of diverter board 121 and the access board 110 to be located in different planes. That is, by arranging the first bending portion 122 and the second bending portion 123, it can be achieved that the diverter board 120 is bent around the access board 110 toward the cell 210 of the battery 200.

It can be understood that the first bending portion 122 and the second bending portion 123 are located on the same side of the main body of diverter board 121 and are arranged at intervals along the extension direction of the main body of diverter board 121, so as to facilitate the diverter board 120 to be bent around the access board 110 toward the cell 210 of the battery 200, with a relatively small bending force required.

In a possible implementation, the first connection portion 111 is arranged opposite to the first bending portion 122, and the second connection portion 112 is located between the second bending portion 123 and the first bending portion 122. In this way, it is convenient for the current to enter the connection board 130 through the diverter board 120, which is conducive to reducing the size *d* of the protection board 100.

As shown in FIG. 1, in some embodiments, the rigid board 140 is arranged on a side of the access board 110 away from the first connection portion 111 and the second connection portion 112, with the extension direction of the rigid board 140 being consistent with the extension direction of the access board 110, and the rigid board 140 is connected to the access board 110.

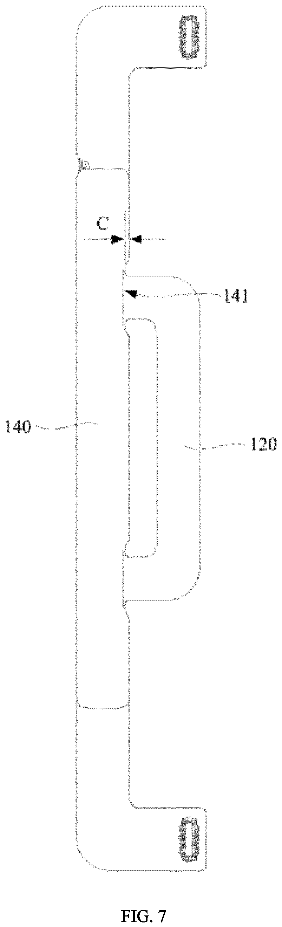

FIG. 7 is a structurally schematic diagram of FIG. 1 from yet another angle. As shown in FIG. 7, in order to reduce the size *d* of the protection board 100, the rigid board 140 is provided with an accommodating groove 141, with a notch of the accommodating groove 141 facing one side of the diverter board 120, and the accommodating groove 141 is configured to accommodate the first bending portion 122 and the second bending portion 123. In this way, the size *d* of the protection board 100 is the width of the rigid board 140.

Specifically, there are two accommodating grooves 141. One of the accommodating grooves 141 is configured to accommodate the first bending portion 122, and the other accommodating groove 141 is configured to accommodate the second bending portion 123.

In a possible implementation, a groove depth *C* of the accommodating groove 141 is 0.1-2mm.

Exemplarily, the groove depth *C* of the accommodating groove 141 may be 0.3mm, 0.5mm, 1mm or 1.5mm.

When the groove depth *C* of the accommodating groove 141 is less than 0.1mm, it is difficult for the accommodating groove 141 to accommodate the first bending portion 122 and the second bending portion 123, which may easily cause the size *d* of the protection board 100 to increase.

When the groove depth *C* of the accommodating groove 141 is greater than 2mm, the accommodating groove 141 occupies a large area, which is not conducive to the arrangement of the protection circuit on the rigid board 140.

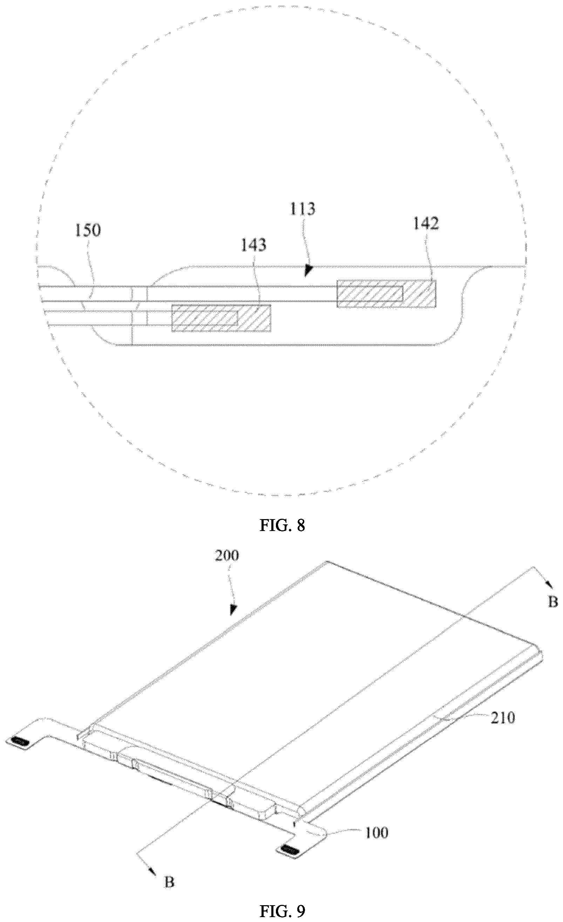

FIG. 8 is a partially enlarged view at A in FIG. 4. As shown in FIG. 8, in some embodiments, the protection board 100 also includes a detection component 150, which is located on the side of the rigid board 140 facing the access board 110, and the detection component 150 is electrically connected to the rigid board 140.

Specifically, the detection component 150 is a temperature detection component, which is used for monitoring the temperature of the battery 200. Where, the detection component 150 may be an NTC device. NTC is the abbreviation of Negative Temperature Coefficient, which means negative temperature coefficient, broadly indicating a semiconductor material or component with a large negative temperature coefficient. The so-called NTC device is a negative temperature coefficient thermistor.

The access board 110 has an avoidance groove 113 for avoiding the detection component 150, thereby facilitating the assembling of the detection component 150.

In the present embodiment, the rigid board 140 is provided with a third connection portion 142 and a fourth connection portion 143, and there is a spacing between the third connection portion 142 and the fourth connection portion 143 along an extension direction of the avoidance groove 113, and orthographic projections of the third connection portion 142 and the fourth connection portion 143 in a plane where a side wall of the avoidance groove 113 at one end along its extension direction is located are at least partially overlapped. The third connection portion 142 and the fourth connection portion 143 are configured to connect with different pins of the detection component 150.

Specifically, the third connection portion 142 and the fourth connection portion 143 are bonding pads arranged on the rigid board 140.

It can be understood that, compared with the fact that the third connection portion 142 and the fourth connection portion 143 is arranged side by side and there is a spacing between the orthographic projections of the third connection portion 142 and the fourth connection portion 143 in the plane where the side wall of the avoidance groove 113 at one end along its extension direction is located, that is, the third connection portion 142 and the fourth connection portion 143 is arranged side by side along the width direction of the avoidance groove 113, in the present embodiment, the width of the avoidance groove 113 may be reduced, improving the diversion effect of the diverter board 120, which is beneficial for reducing the size *d* of the protection board 100.

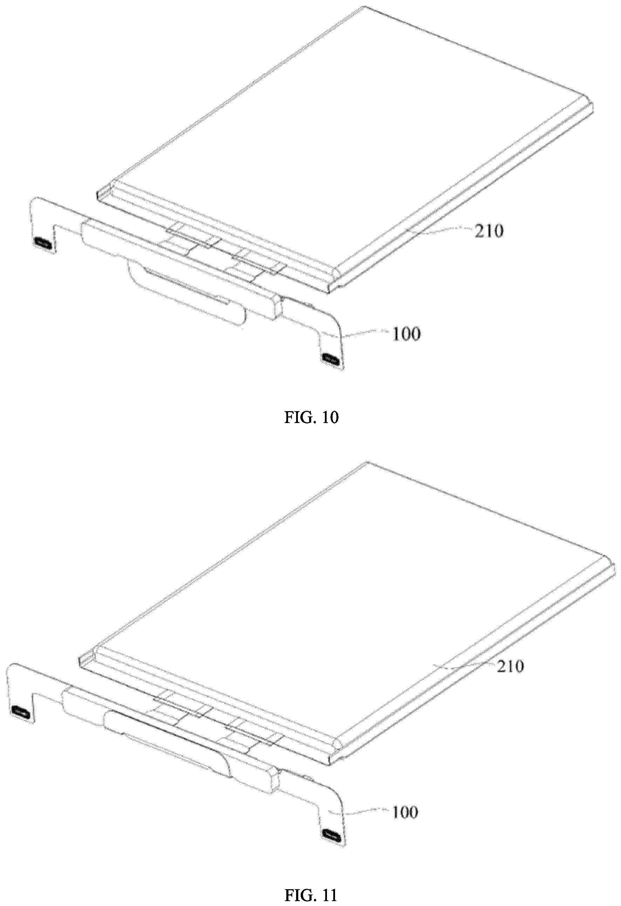

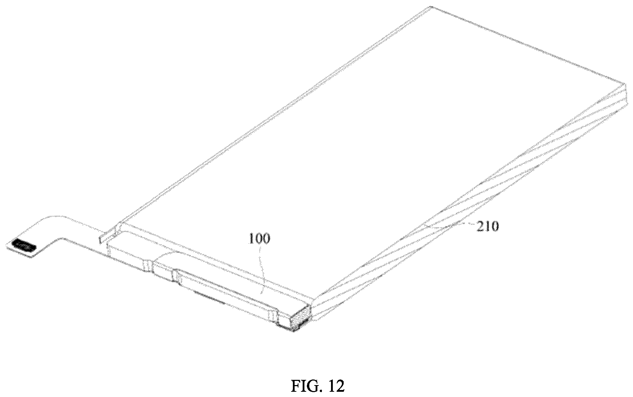

FIG. 9 is a structurally schematic diagram of a battery provided by an embodiment of the present application. FIG. 10 is a structurally schematic diagram of a protection board in a battery provided by an embodiment of the present application before being bent. FIG. 11 is a structurally schematic diagram of a protection board in a battery provided by an embodiment of the present application after being bent. FIG. 12 is a structurally schematic diagram of the interior after sectioning along a B-B line in FIG. 9.

Referring to FIG. 9 to FIG. 12, an embodiment of the present application further provides a battery 200, which includes a cell 210, at least one connector 220, and the protection board 100 provided in the above embodiment.

The cell 210 is connected to the access board 110 of the protection board 100, the connector 220 is arranged in one-to-one correspondence with the connection board 130 of the protection board 100, and the connector 220 is connected to the connection board 130.

Where, the structure and principle of the protection board 100 are described in detail in the above embodiments, and will not be repeated in detail in the present embodiment.

The present embodiment provides a battery 200, where, by arranging a cell 210, at least one connector 220 and the protection board 100 provided by the above embodiments, the size *d* of the protection board 100 is small, so that the configuration space of the cell 210 may be increased, thereby improving the capacity of the battery 200.

In a possible implementation, the diverter board 120 of the protection board 100 is bent around the rigid board 140 of the protection board 100 toward the cell 210. The orthographic projections of the diverter board 120, the access board 110, and the rigid board 140 toward a plane of the cell 210 along its extension direction are at least partially located within a top sealing edge of the cell 210. In this way, the structure of battery is compact and the energy density of the battery may be improved.

Finally, it should be noted that the above embodiments are only used to illustrate the technical solutions of the present application, rather than limiting them; although detailed description has been made to the present application with reference to the aforementioned embodiments, the person skilled in the art should understand that they may still modify the technical solutions recorded in the aforementioned embodiments, or perform equivalent replacements on some or all of the technical features; however, these modifications or replacements do not make the essence of the corresponding technical solutions deviate from the scope of technical solutions in various embodiments of the present application.

## Claims

1. A protection board, comprising an access board, a diverter board, a rigid board and at least one connection board, wherein
the rigid board, the diverter board and the connection board are all connected to the access board, the rigid board and the access board are stacked to each other, the diverter board is located on one side of the access board and is bent around the rigid board, and the at least one connection board is located at one end of the access board along its extension direction.

2. The protection board according to claim 1, wherein the connection board is two in number, and two connection boards are located at both ends of the access board along its extension direction respectively.

3. The protection board according to claim 1 or 2, wherein the diverter board comprises a main body of diverter board and a first bending portion and a second bending portion that are respectively connected to different parts of the main body of diverter board, and the first bending portion and the second bending portion are located on a same side of the main body of diverter board and are arranged at intervals along an extension direction of the main body of diverter board;
one end of the first bending portion is connected to the main body of diverter board and the other end of the first bending portion is connected to the access board; and one end of the second bending portion is connected to the main body of diverter board and the other end of the second bending portion is connected to the access board.

4. The protection board according to claim 3, wherein the access board is provided with a first connection portion and a second connection portion, the first connection portion is arranged opposite to the first bending portion, and the second connection portion is located between the second bending portion and the first bending portion.

5. The protection board according to claim 4, wherein the access board, the diverter board and the connection board are integrally formed,
the rigid board is arranged on one side of the access board away from the first connection portion and the second connection portion, with an extension direction of the rigid board being consistent with the extension direction of the access board.

6. The protection board according to any one of claims 3 to 5, wherein the rigid board is provided with accommodating grooves with a notch of each accommodating groove facing one side of the diverter board, and the accommodating grooves are configured to accommodate the first bending portion and the second bending portion respectively.

7. The protection board according to claim 6, wherein a groove depth of the accommodating grooves is 0.1-2mm.

8. The protection board according to any one of claims 3 to 7, further comprising a detection component, wherein the detection component is located on one side of the rigid board facing the access board, the detection component being connected to the rigid board;
the access board has an avoidance groove for avoiding the detection component.

9. The protection board according to claim 8, wherein the rigid board is provided with a third connection portion and a fourth connection portion; a spacing is disposed between the third connection portion and the fourth connection portion along an extension direction of the avoidance groove; and orthographic projections of the third connection portion and the fourth connection portion in a plane where a side wall of the avoidance groove at one end along its extension direction is located are at least partially overlapped; and the third connection portion and the fourth connection portion are configured to connect with different pins of the detection component respectively.

10. A battery, comprising a cell, at least one connector and the protection board according to any one of claims 1 to 9, wherein
the cell is connected to the access board of the protection board;
the connector is arranged in one-to-one correspondence with the connection board of the protection board, with the connector being connected to the connection board.

11. The battery according to claim 10, wherein the diverter board of the protection board is bent around the rigid board of the protection board toward the cell;
orthographic projections of the diverter board, the access board, and the rigid board toward a plane of the cell along its extension direction are at least partially located within a top sealing edge of the cell.
